# EUROPEAN PATENT APPLICATION

(11) **EP 1 134 739 A2**
(43) Date of publication of application: **19.09.2001**
(21) Application number: 01302452.6
(22) Date of filing: 16.03.2001
(51) Int. Cl.: G11B 27/032, G11B 27/34, G11B 31/00

(54) **Information reproducing apparatus, image display control method, and recording medium**

(30) Priority: 17.03.2000 JP 2000075643
(71) Applicant: SONY CORPORATION, Tokyo 141 (JP)
(72) Inventor: Tanaka, Hiroki, Sony Corporation, Int Prop Dept, Tokyo 141 (JP); Sugiyama, Katsuhiro, c/o Sony Corp, Int Prop Dept, Tokyo 141 (JP)
(74) Representative: Horner, David Richard

(57) **Abstract**

An information reproducing apparatus comprises means for reproducing image signals recorded on a recording medium; means for setting at least one or more start points and end points for editing the image signals recorded on the recording medium; means for storing at least one or more image-signal start points and end points thus set; and means for controlling the display of marks corresponding to the stored image-signal start points and end points. The display control means controls the display in such a manner as to display the marks corresponding in number to the storable start and end points. Due to the display control, the color of the marks corresponding to the start and end points stored already is rendered different from the color of the other marks corresponding to the start and end points not stored yet, or the color of the marks corresponding to the start and end points reproduced already is rendered different from the color of the other marks corresponding to the start and end points not reproduced yet.

## Description

### BACKGROUND OF THE INVENTION

The present invention relates to an information reproducing apparatus, an image display control method and a recording medium

Recently, digital appliances such as personal computers, digital video cameras and so forth are widely diffused in use. And with the progress of such diffusion, it is possible of late to simply record output data of a digital video camera on a digital video tape loaded in a DVTR (Digital Video Tape Recorder), or to edit image data, which have already been recorded on a digital video tape, in compliance with the choice of a user and further to dub such edited data on another recording medium.

However, in such a DVTR, it has been customary heretofore that, during the time the user performs an editing work while viewing the video images displayed on a screen, the screen is full of displayed items including index information (e.g., time stamps representing date, time, minute, second and frame) and other setting information for expediting the editing work.

Consequently, the images are rendered difficult to be viewed due to the index information and the setting information displayed on the entire screen, whereby the editing work is impeded as a result.

### SUMMARY OF THE INVENTION

Embodiments of the present invention seek to facilitate a video data editing work by displaying marks that indicate start (IN) points and end (OUT) points of the video data to be edited.

According to one aspect of the present invention, there is provided an information reproducing apparatus which comprises reproducing means to reproduce image signals recorded on a recording medium; setting means to set at least one or more start points and end points for editing the image signals recorded on the recording medium; storage means to store at least one or more image-signal start points and end points set by the setting means; and display control means to control the display of marks corresponding to the image-signal start points and end points stored in the storage means.

Preferably, the display control means is capable of controlling the display in such a manner as to display the marks corresponding in number to the start and end points storable in the storage means.

Preferably, the display control means is capable of controlling the display in a manner that the color of the marks corresponding to the start and end points stored already in the storage means becomes different from the color of the other marks corresponding to the start and end points not stored yet.

Preferably, when the recording medium is being reproduced by the reproducing means in accordance with the start and end points stored in the storage means, the display control means is capable of controlling the display in a manner that the color of the marks corresponding to the start and end points already reproduced becomes different from the color of the other marks corresponding to the start and end points not reproduced yet.

According to another aspect of the present invention, there is provided an image display control method which comprises a step of reproducing image signals recorded on a recording medium; a step of setting at least one or more start points and end points for editing the image signals recorded on the recording medium; a step of controlling storage of at least one or more image-signal start points and end points set by the process at the setting step; and a step of controlling the display of marks corresponding to the image-signal start points and end points controlled with regard to the storage thereof by the process at the storage control step.

And according to a further aspect of the present invention, there is provided a recording medium where a program readable by a computer is recorded to execute a processing routine. The routine comprises a step of reproducing image signals recorded on a recording medium; a step of setting at least one or more start points and end points for editing the image signals recorded on the recording medium; a step of controlling storage of at least one or more image-signal start points and end points set by the process at the setting step; and a step of controlling the display of marks corresponding to the image-signal start points and end points controlled with regard to the storage thereof by the process at the storage control step.

In embodiments of the information reproducing apparatus, the image display control method and the program recorded on the recording medium, first the image signals recorded on the recording medium are reproduced therefrom, then at least one or more start and end points for editing the image signals recorded on the recording medium are set, subsequently at least one or more image-signal start and end points thus set are stored, and marks corresponding to the stored image-signal start and end points are displayed, whereby the user is enabled to readily perform a video data editing work with facility.

Further particular and preferred aspects of the presen invention are set out in the accompanying independent and dependen claims. Features of the dependent claims may be combined with feature of the independent claims as appropriate, and in combinations othe: than those explicitly set out in the claims.

The present invention will be described further, by way of example only, with reference to preferred embodiments thereof as illustrated in the accompanying drawings, in which:

### BRIEF DESCRIPTION OF THE DRAWINGS

Fig. 1 is a block diagram showing a structural example of a digital video tape recorder (DVTR) with an internal camera embodying the present invention;
Figs. 2 to 8 are explanatory diagrams showing some examples of program edit screens;
Fig. 9 is an explanatory diagram showing a recording lag; and
Fig. 10 is a flowchart of a processing routine to execute setting of program information and editing of video data.

### DESCRIPTION OF THE PREFERRED EMBODIMENTS

Hereinafter some preferred embodiments of the present invention will be described in detail with reference to the accompanying drawings.

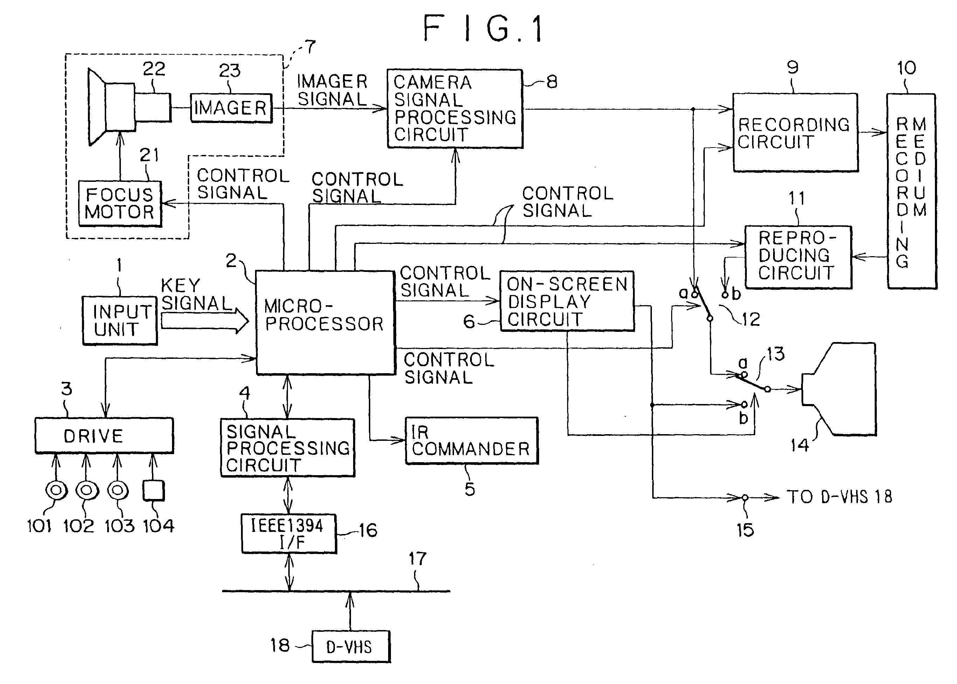

Fig. 1 is a block diagram showing a structural example of a digital video tape recorder (DVTR) with an internal camera embodying the present invention. An input unit 1 consists of a keyboard, a mouse, buttons, switches and so forth. And upon manipulation by a user, a key signal corresponding to such manipulation is inputted to a microprocessor 2.

Then the microprocessor 2 generates a control signal in response to the input key signal received from the input unit 1, so as to control each component circuit. Further in response to the key signal from the input unit 1, the microprocessor 2 stores, in a buffer memory, program information representing an IN (start) point and an OUT (end) point of video data to be edited, or reads such IN and OUT points of the program information stored in the buffer memory.

The microprocessor 2 further issues a command to control a D-VHS 18 (Digital-Video Home System) (trade name) in accordance with the program information read out from the buffer memory, and then outputs the command to either a signal processing circuit 4 or an IR (Infrared Radiation) commander 5 by changing an internal output switch. A drive 3 is connected to the microprocessor 2, and a magnetic disk 101, an optical disk 102, a magneto-optical disk 103 or a semiconductor memory 104 can be loaded in the drive 3.

The signal processing circuit 4 packetizes an AV/C (Audio Video/Control) command supplied thereto from the microprocessor 2 for controlling the D-VHS 18, and transmits the packet data to the D-VHS 18 via an IEEE (The Institute of Electrical and Electronics Engineers) 1394 interface (IF) 16 and an IEEE 1394 serial bus 17.

The IR commander 5 conforms with SIRCS (Standard Code for Infrared Remote Control System) for example and, in response to the remote control command supplied thereto from the microprocessor 2 for controlling the D-VHS 18, outputs a corresponding infrared signal (IR signal) from an unshown infrared-ray emitter to an unshown light sensor of the D-VHS 18.

An on-screen display circuit 6 converts text information into corresponding image data in response to the control signal supplied from the microprocessor 2, and then supplies the image data to a terminal b of a switch 13 or to a line output terminal 15.

A video camera 7 comprises a focus motor 21, a display 22 and an imager 23. The focus motor 21 functions in response to the control signal supplied from the microprocessor 2, and drives the imager 23 in a manner to pick up the image displayed on the display 22. The imager 23 consists of a lens system and a CCD (Charge Coupled Device) for example, and supplies an imager signal (pickup signal) to a camera signal processing circuit 8.

The camera signal processing circuit 8 executes analog-to-digital conversion of the imager signal supplied from the imager 23, in response to the control signal from the microprocessor 2 to thereby generate video (image) data, and then supplies such data to a recording circuit 9.

Subsequently, in response to the control signal supplied from the microprocessor 2, the recording circuit 9 encodes with compression the video data from the camera signal processing circuit 8 in conformity with a predetermined format such as, e.g., MPEG (Moving Picture Experts Group) format and, after further executing error correction, modulation and so forth of the signal, records the processed signal on a recording medium 10. The recording medium 10 consists of a digital video tape for example.

A reproducing circuit 11 reads out the recorded video data from the recording medium 10 and executes predetermined processes of demodulation, error correction, decoding and digital-to-analog conversion of the reproduced signal to thereby generate video signal, and then outputs such video signal to a finder LCD (Liquid Crystal Digital) panel 14 via a terminal b of a switch 12 and a terminal a of a switch 13.

When the video data from the camera signal processing circuit 8 is to be outputted to the finder LCD panel 14 via the switch 13, the switch 12 is so changed as to select the terminal a in response to the control signal supplied from the microprocessor 2. And when the video data from the reproducing circuit 11 is to be outputted to the finder LCD panel 14 via the switch 13, the switch 12 is so changed as to select the terminal b.

When the video data is to be outputted to the finder LCD panel 14, the switch 13 is so changed as to select the terminal a in response to the command from the on-screen display circuit 6 controlled by the microprocessor 2. Meanwhile, when the image data corresponding to the text information and so forth from the on-screen display circuit 6 is to be outputted to the finder LCD panel 14, the switch 13 is so changed as to select the terminal b.

The finder LCD panel 14 reproduces the video data inputted via the switches 12 and 13, or reproduces the image data corresponding to the text information and so forth inputted via the on-screen display circuit 6 and the switch 13. The information of a frame counter obtained from the on-screen display circuit 6 is outputted to the D-VHS 18 via a line output terminal 15.

The D-VHS 18 is connected to the DVTR via an unshown AV cable or the IEEE 1394 serial bus 17, and records the video data on the loaded D-VHS tape in accordance with the command outputted from the DVTR. (A concrete example thereof will be described later.) The D-VHS 18 further records the frame counter information, which is inputted from the DVTR, on the D-VHS tape.

Now a fundamental operation of the DVTR shown in Fig. 1 will be explained below.

In recording, the imager 23 of the video camera 7 picks up the image being displayed on the display 22 and supplies the image signal to the camera signal processing circuit 8. Then the camera signal processing circuit 8 executes analog-to-digital conversion and so forth of the imager signal obtained from the digital video camera 7, and supplies the processed video data to the recording circuit 9. Subsequently the recording circuit 9 executes predetermined record signal processes with regard to the video data from the camera signal processing circuit 8 and records the processed data on the recording medium 10. At this time, an edit mode is set for the video data so that the relevant video data can be identified as those adapted for editing (i.e., PICT_INDE_EDIT is attached to the top of the video data).

And in reproduction, the reproducing circuit 11 reads out the video data (where an edit mode is set) recorded on the recording medium 10, and after execution of the predetermined signal processing (demodulation, error correction, decoding and digital-to-analog conversion), the circuit 11 outputs the processed data to the finder LCD panel 14 via the terminal b of the switch 12 and the terminal a of the switch 13, thereby reproducing the picture.

Referring to the picture reproduced on the finder LCD panel 14, the user sets program information (IN point and OUT point of the video data) to be used for editing. As a result, the microprocessor 2 stores the program information in the buffer memory in response to a command (setting of the program information) from the user. And upon start of the editing process by the user, the microprocessor 2 records, in accordance with the program information stored in the buffer memory, the edited video data on an unshown D-VHS tape, which is loaded in the D-VHS 18, via an AV cable.

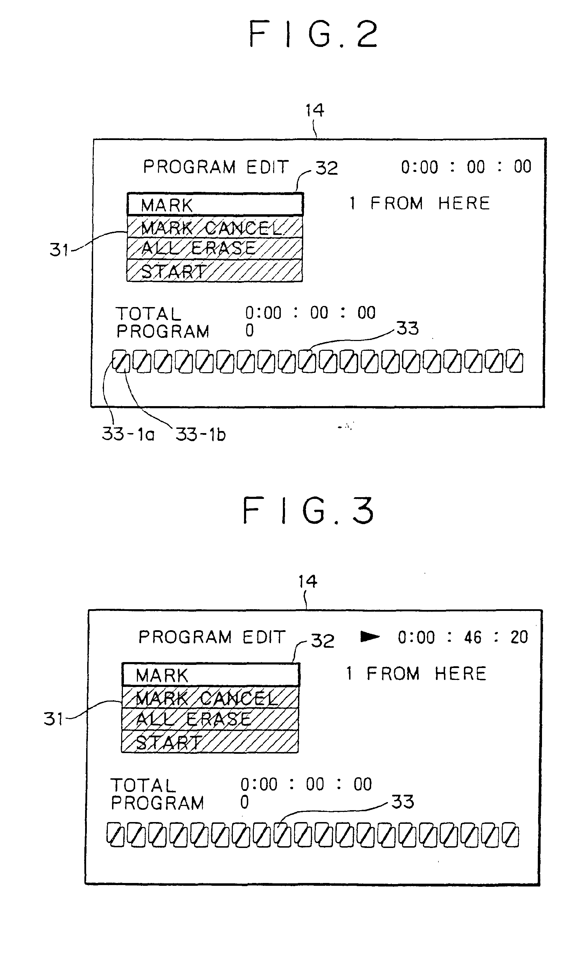

Next, with reference to program edit screens shown in Figs. 2 to 5, an explanation will be given on the process of setting the program information (IN point and OUT point) of the video data to be used for editing. It is supposed here that video data, where an edit mode is set as 1 minute, 40 seconds and 5 frames (hereinafter expressed simply as 0:01:40:05), are recorded on the recording medium 10. Upon reception of a command from the user to indicate reproduction of the video data, the video data are read out from the recording medium 10, and then are outputted to the finder LCD panel 14 via the reproducing circuit 11, the terminal b of the switch 12 and the terminal a of the switch 13, whereby the video data are reproduced.

The example of Fig. 2 represents a program edit screen immediately after reproduction of the video data recorded on the recording medium 10. In this example where the program information has not been set yet by the user, "Mark" of the edit mode in an edit mode display area 31 is selectable, but "Mark cancel", "All erase" and "Start" are invalid to be unselectable. In this case, a cursor 32 can be positioned only on "Mark" alone.

A mark group 33 consists of a certain number of marks (e.g., 20) corresponding to programs settable at once, and the marks are displayed in white. Upon set of program information by the user, the corresponding mark is displayed in blue. For example, when an IN point of a program 1 has been set, a mark 33-1a is displayed in blue. And when an OUT point of the program 1 has been set, a mark 33-1b is displayed in blue. In the example of Fig. 2 where none of program information is set, all the marks are displayed in white.

A total time (0:00:00:00 in this case) of a program (0 in this case) is displayed on the program edit screen shown in Fig. 2, and further "1 From here" is displayed thereon, hence urging the user to set an IN point of the program 1.

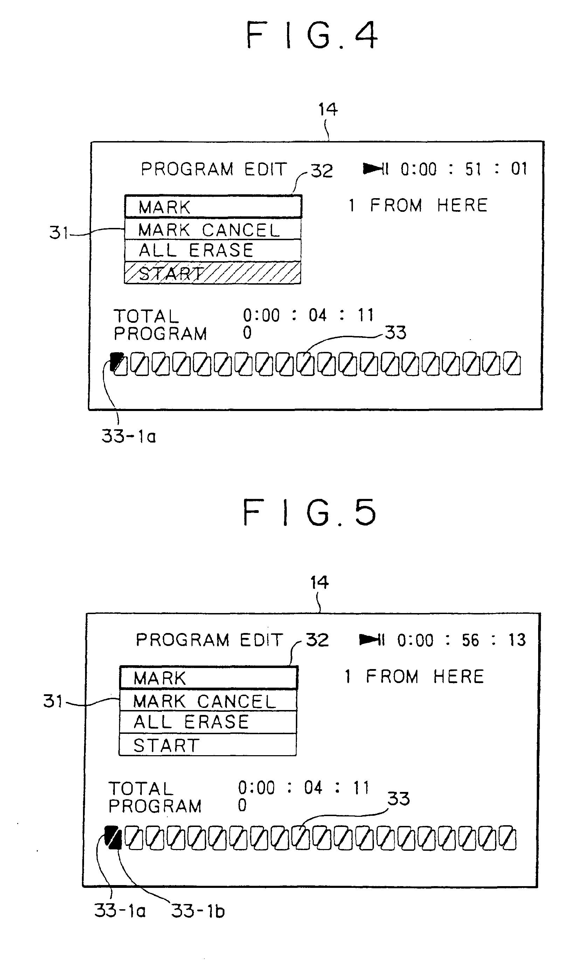

Then the user decides an IN point of the desired video data to be used for editing, at a predetermined position with reference to the picture (Fig. 2) reproduced on the finder LCD panel 14. For example, when the video data from time 0:00:46:20 are to be edited as shown in Fig. 3, the user manipulates (depresses) a button of the input unit 1 to thereby decide (set) the IN point of the program 1. And in response to a mark command received from the user, the microprocessor 2 stores the IN point of the program 1 in the buffer memory, and then displays a new program edit screen on the finder LCD panel 14. Consequently, a program edit screen shown in Fig. 4 for example is displayed.

In the example of Fig. 4 where an IN point of one program (program 1 in this case) is set by the user, a mark 33-1a out of the entire twenty marks 33 is displayed in blue, and any other modes than "Start" out of the entire edit modes in the edit mode display area 31 are rendered selectable. The total time 0:00:04:11 (elapsed time from the IN point set by the user) of the program is displayed, and further "1 Until here" is also displayed, hence expediting the user to set an OUT point of the program 1.

In the edit mode of the edit mode display area 31, if the user manipulates the input unit 1 to input an execution command while moving the cursor 32 to the position of "Mark cancel" or "All erase", then it is possible to return the display to the former program edit screen shown in Fig. 2.

Further the user decides an OUT point of the desired video data to be used for editing, at a predetermined position with reference to the picture (Fig. 4) reproduced on the finder LCD panel 14. For example, when the video data until time 0:00:51:01 are to be edited as shown in Fig. 4, the user manipulates a button of the input unit 1 to thereby decide the OUT point of the program 1. And in response to a mark command received from the user, the microprocessor 2 stores the OUT point of the program 1 in the buffer memory, and then displays a new program edit screen on the finder LCD panel 14. Consequently, a program edit screen shown in Fig. 5 for example is displayed.

In the example of Fig. 5 where an OUT point of one program (program 1 in this case) is set by the user, a mark 33-1b out of the entire twenty marks 33 is displayed in blue. The mark 33-1a is already displayed in blue.

When the IN and OUT points of program 1 have thus been set by the processing mentioned above, "Start" that has been unselectable in the edit mode of the edit mode display area 31 is rendered selectable to thereby enable execution of the editing process. In Fig. 5 for example, if the user manipulates the input unit 1 in the edit mode of the edit mode display area 31 to input an execution command by positioning the cursor 32 on "Start", then editing is started at the IN point (mark 33-1a) and the OUT point (mark 33-1b) of the program information stored in the buffer memory of the microprocessor 2.

Upon decision of the OUT point of program 1, "2 From here" is displayed as shown in Fig. 5 for urging the user to set the IN point of program 2, so that the user is enabled to set the program information subsequent to the program 2. And after completion of setting the entire program information, the user can start the editing process by positioning the cursor 32 on "Start" in the edit mode display area 31 and inputting an execution command.

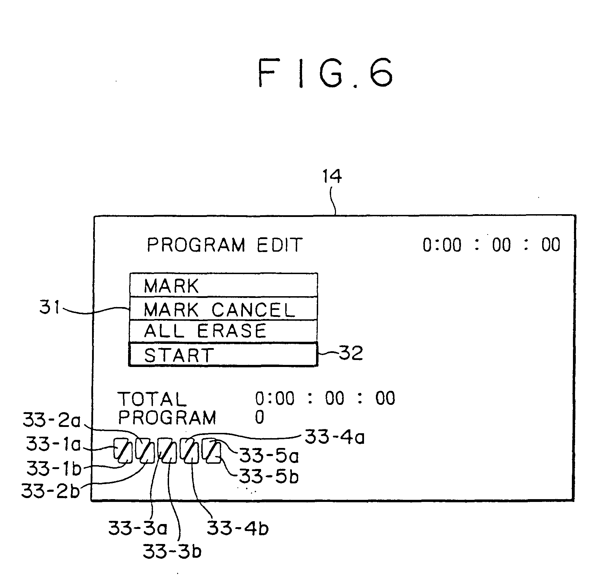

Next, with reference to program edit screens of Figs. 6 to 8, an explanation will be given on an editing process executed in accordance with the program information set by the processing mentioned above. It is supposed here that the program information (programs 1 to 5) have already been set and stored in the buffer memory of the microprocessor 2. Although unshown, marks 33-1a to 33-5a and marks 33-1b to 33-5b are displayed in blue. And a D-VHS tape is loaded in the D-VHS 18, which is held on standby in a recording pause.

The example of Fig. 6 represents a program edit screen immediately after the user manipulates the input unit 1 to input an execution command by positioning the cursor 32 on "Start" of the edit mode display area 31. More specifically, when the program information has been set as mentioned, the marks 33-1a to 33-5a and the marks 33-1b to 33-5b already set are displayed in blue. And upon execution of the editing process by the user, the microprocessor 2 displays a new program edit screen on the finder LCD panel 14 in response to the command inputted by the user (i.e., the marks 33-1a to 33-5a and 33-1b to 33-5b displayed in blue are changed to white).

Upon start of the editing process, the microprocessor 2 controls the reproducing circuit 11 to read out the video data recorded on the recording medium 10, and then outputs the video data to the D-VHS 18 via the AV cable.

In accordance with the program information read out from the buffer memory, the microprocessor 2 issues a remote control command to the IR commander 5 for releasing the D-VHS 18 from the recording pause upon arrival of the IN point of program 1 (time 00:00:46:20 in this case) set by the user, and then an IR signal is outputted from an unshown infrared emitter of the IR commander 5. The D-VHS 18 receives the recording pause release command from the IR commander 5 and enables the DVTR to start recording the video data, which are supplied via the AV cable, onto the loaded D-VHS tape.

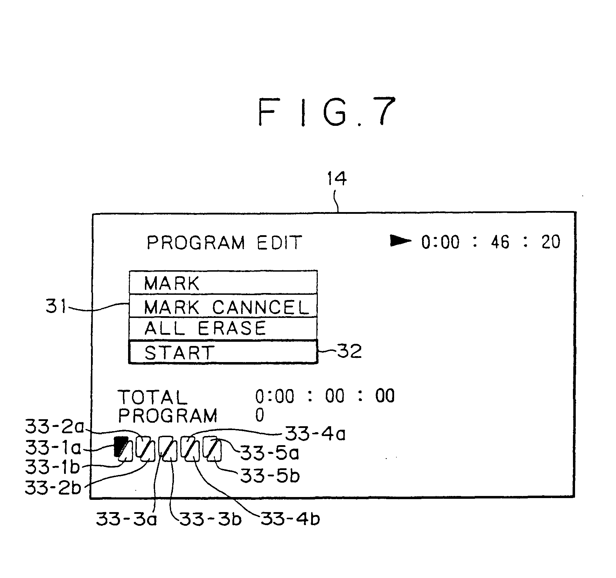

Further the microprocessor 2 displays, in response to the command from the user, a new program edit screen on the finder LCD panel 14, whereby a program edit screen shown in Fig. 7 for example is displayed.

The example of Fig. 7 represents a program edit screen displayed during the period of recording the program 1. In this case, the displayed mark 33-1a indicating the recording of the program 1 is changed in color from white to blue.

In accordance with the program information read out from the buffer memory, the microprocessor 2 issues a remote control command to the IR commander 5 for releasing the D-VHS 18 from the recording pause upon arrival of the OUT point of program 1 (time 00:00:51:01 in this case) set by the user, and then an IR signal is outputted from an unshown infrared emitter of the IR commander 5. The D-VHS 18 receives the recording pause release command from the IR commander 5, and pauses the recording of the video data recorded on the D-VHS tape.

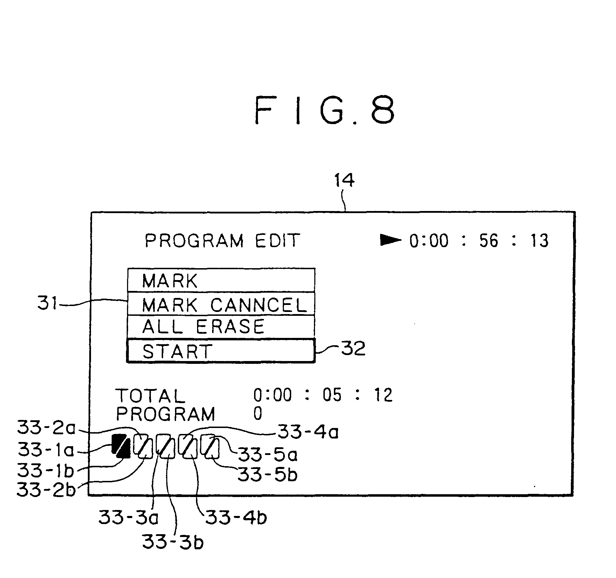

Further the microprocessor 2 displays, in response to the command from the user, a new program edit screen on the finder LCD panel 14, whereby a program edit screen shown in Fig. 8 for example is displayed.

The example of Fig. 8 represents a program edit screen displayed after termination of recording the program 1. In this case, the displayed mark 33-1b is changed in color from white to blue so as to indicate termination of recording the program 1.

And in accordance with the program information read out from the buffer memory, the microprocessor 2 sends a recording pause command to the D-VHS 18 upon arrival of the IN point of program 2 set by the user, thereby recording the video data again on the D-VHS tape. Subsequently, upon arrival of the OUT point of program 2, the microprocessor 2 sends a recording pause command to the D-VHS 18 to thereby pause the data recording on the D-VHS tape. Similarly, the editing process mentioned above is executed repeatedly with regard to each of the programs 3 to 5.

In response to the command received from the DVTR, the D-VHS 18 releases the recording pause or pauses the video data recording. However, there occurs a time lag between reception of the recording-pause release command and actual start of the recording.

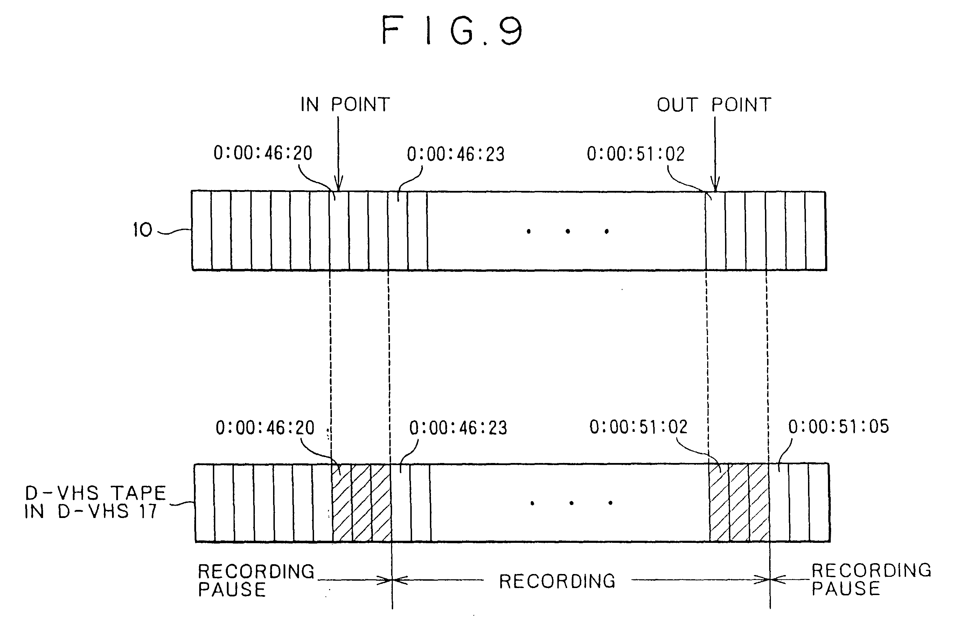

More specifically, as shown in Fig. 9, the DVTR sends a recording-pause release command to the D-VHS 18 upon arrival of the IN point (time 0:00:46:20 in the example of Fig. 9) of the program read out from the buffer memory. And after receiving the command from the DVTR, the D-VHS 18 releases the recording pause and then records the video data on the loaded D-VHS tape. Actually, however, the recording is started with a delay from the IN point set by the user (with a delay of three frames in the example of Fig. 9), i.e., the recording is started at time 0:00:46:23. Similarly, upon arrival of the OUT point (time 0:00:51:02), a recording pause command is sent from the DVTR to the D-VHS 18, but the recording is actually paused with a delay of three frames (i.e., the recording is performed until time 0:00:51:05 and then is paused).

Prior to a start of the editing process, information of the frame counter obtained from the on-screen display circuit 6 is outputted to the D-VHS 18 via the line output terminal 15 and then is recorded in the D-VHS 18. Subsequently, the user performs dummy editing on the D-VHS tape by the use of invalid data and displays, for confirmation on the monitor, the lag (delay) between the frame counter at the set IN point and the frame counter recorded actually on the D-VHS tape. Thereafter the user calculates the offlet (three frames in this case) of the frame counter displayed on the monitor, and then stores it in the microprocessor 2. As a result, the DVTR is enabled to send a recording-pause release command to the D-VHS 18 at the time anterior by three frames to the IN point set by the user, or to send a recording pause command at the time anterior by three frames to the OUT point set by the user.

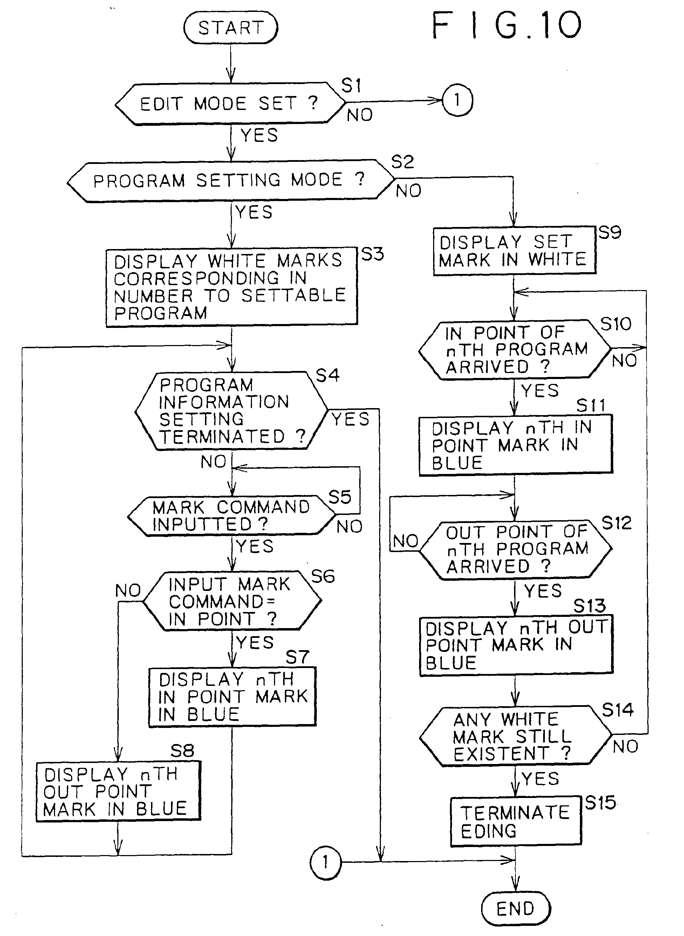

Now a processing routine to be executed by the microprocessor 2 for setting the program information and editing the video data will be explained below with reference to a flowchart of Fig. 10. This processing routine begins when the user manipulates the input unit 1 to input a command for starting the program information setting or the video data editing.

At step S1, the microprocessor 2 controls the reproducing circuit 11 in response to a command from the user, and enables the circuit 11 to read out the video data recorded on the recording medium 10. Subsequently the microprocessor 2 makes a decision as to whether an edit mode is set or not in the video data thus read out, i.e., whether PICT_INDE_EDIT is recorded or not at the top of the video data read out. And if the result of this decision signifies that an edit mode is not set in the video data, the routine is terminated.

Meanwhile, if the result of the decision at step S1 signifies that an edit mode is set in the video data, the operation proceeds to step S2, where the microprocessor 2 makes a decision as to whether the relevant mode is a program setting mode or not. In case the result of this decision signifies a program setting mode, the operation proceeds to step S3, where the microprocessor 2 outputs the video data to the finder LCD panel 14 to display such a program edit screen as shown in Fig. 2. At this time, the marks 33 corresponding in number to the settable programs are displayed in white.

At step S4, the microprocessor 2 makes a decision as to whether the program information setting by the user has been terminated or not, i.e., whether a program information terminating command has been inputted or not by the user's manipulation of the input unit 1. And if the result of this decision signifies termination of the program information setting, the processing routine is completed. Meanwhile, if the result of the decision at step S4 is negative to signify no termination of the program information setting, the operation proceeds to step S5.

At step S5, the microprocessor 2 makes a decision as to whether a mark command has been inputted or not, i.e., whether an IN point or an OUT point of the program has been set or not by the user's manipulation of the input unit 1. And if the result of this decision is negative to signify no input of a mark command, the operation is kept on standby until the result of the decision at step S5 signifies input of a mark command.

Meanwhile, if the result of the decision at step S5 signifies input of a mark command, the operation proceeds to step S6, where the microprocessor 2 makes a decision as to whether the input mark command is the nth IN point or not. And if the result of this decision signifies that the input mark command is the nth IN point, the operation proceeds to step S7. Subsequently at step S7, the microprocessor 2 stores, in the memory 4, the IN point of the nth program inputted at step S5, and displays in blue (Fig. 4) the IN point mark (33-1a in this case) of the nth program on the program edit screen being displayed on the finder LCD panel 14. Thereafter the operation returns to step S4, and the processing mentioned above is repeated.

Meanwhile, if the result of the decision at step S6 signifies that the input mark command is not the nth IN point, i.e., the input command is the nth OUT point, then the operation proceeds to step S8, where the microprocessor 2 stores, in the memory 4, the OUT point of the nth program inputted at step S5, and displays in blue (Fig. 5) the OUT point mark (33-1b in this case) of the nth program on the program edit screen being displayed on the finder LCD panel 14. Thereafter the operation returns to step S4, and the processing mentioned above is repeated.

If the result of the decision at step S2 signifies that the relevant mode is not a program setting mode, i.e., when the program information has already been set, the operation proceeds to step S9, where the microprocessor 2 displays in white (Fig. 6) the mark 33, which indicates that the program information has already been set, on the program edit screen being displayed on the finder LCD panel 14. At this time, the microprocessor 2 controls the reproducing circuit 11 to read out the video data recorded on the recording medium 10, and then outputs the video data to the D-VHS 18 via the AV cable.

At step S10, the microprocessor 2 makes a decision in accordance with the program information read out from the memory 4, as to whether the IN point of the nth program has arrived or not. And if the result of this decision is negative to signify no arrival of the IN point of the nth program, the operation is kept on standby at step S10 until the result of the decision signifies arrival of the IN point of the nth program.

Meanwhile, if the result of the decision at step S10 signifies arrival of the IN point of the nth program, the operation proceeds to step S11, where the microprocessor 2 sends a recording-pause release command to the D-VHS 18 to thereby start recording of the video data on the D-VHS tape, and then displays in blue (Fig. 7) the IN point mark (33-1a in this case) of the nth program on the program edit screen being displayed on the finder LCD panel 14.

At step S12, the microprocessor 2 makes a decision in accordance with the program information read out from the memory 4, as to whether the OUT point of the nth program has arrived or not. And if the result of this decision is negative to signify no arrival of the OUT point of the nth program, the operation is kept on standby at step S12 until the result of the decision signifies arrival of the OUT point of the nth program. At this time, D-VHS keeps recording the data.

Meanwhile, if the result of the decision at step S12 signifies arrival of the OUT point of the nth program, the operation proceeds to step S13, where the microprocessor 2 sends a recording pause command to the D-VHS 18 to thereby pause recording of the reproduced data on the D-VHS tape, and then displays in blue (Fig. 8) the OUT point mark (33-1b in this case) of the nth program on the program edit screen being displayed on the finder LCD panel 14.

At step S14, the microprocessor 2 makes a decision as to whether any white marks (33-2a to 33-5a and 33-2b to 33-5b in the example of Fig. 8) are still existent or not out of the entire program information set marks 33 (33-1a to 33-5a and 33-1b to 33-5b in the example of Fig. 8) displayed on the finder LCD panel 14. And if the result of this decision signifies that any white marks are still existent, the operation returns to step S10, and the subsequent processing mentioned above is repeated.

In case the result of the decision at step S14 signifies no existence of any white mark, the operation proceeds to step S15, where the microprocessor 2 decides that the editing has been terminated, and the processing routine is completed.

As described above, the microprocessor 2 stores in the buffer memory the program information set by the user, and simultaneously displays the mark 33 corresponding to the program on the finder LCD panel 14, thereby enabling the user to grasp the set information in a short time and also to perform the editing work with facility using the marks 33.

In any of the embodiments mentioned, the marks 33 indicating the set program information are displayed in blue, while the other marks 33 indicating the unfinished editing work are displayed in white. However, the present invention is not limited to such examples alone, and any other color may be used as well. And the marks corresponding to the program in editing may be displayed with blinking or may be changed in shape.

Further in the above embodiments, the number of programs settable at a time is determined to be twenty. However, this numerical value may be selectively changed by the user.

The processing routine described above is executable by software as well as by hardware. In case the routine is executed by software, programs constituting the software are installed into a computer incorporated in exclusive hardware, or are installed from a recording medium into a general-purpose personal computer or the like which is capable of executing various functions through installation of various programs.

As shown in Fig. 1, the recording medium comprises package media distributed for providing programs to the user separately from the computer, such as a magnetic disk 101 (including floppy disk), an optical disk 102 (including CD-ROM (Compact Disk-Read Only Memory), DVD (Digital Versatile Disk)), a magneto-optical disk 103 (including MD (Mini-Disk)), or a semiconductor memory 104 where the programs are recorded. In addition, the recording medium further comprises a program-recorded microprocessor 2, a hard disk drive and so forth provided for the user in a state integrated previously into the computer.

In this specification, the steps that describe the program recorded in the recording medium include the processes executed in time series along the prescribed order and also those executed parallelly or individually without such time-series processing.

Thus, according to the information reproducing apparatus, the image display control method and the program recorded in the recording medium embodying the present invention, it becomes possible for the user to easily perform the video data editing work by first reproducing the image signals recorded on the recording medium, then setting at least one or more start and end points for editing the image signals recorded on the recording medium, subsequently storing at least one or more image-signal start and end points set in this manner, and displaying marks which correspond to such stored image-signal start and end points.

In so far as the embodiments of the invention described above are implemented, at least in part, using software-controlled data processing apparatus, it will be appreciated that a computer program providing such software control and a storage medium by which such a computer program is stored are envisaged as aspects of the present invention.

Although particular embodiments have been described herein, it will be appreciated that the invention is not limited thereto and that many modifications and additions thereto may be made within the scope of the invention. For example, various combinations of the features of the following dependent claims can be made with the features of the independent claims without departing from the scope of the present invention.

## Claims

1. An information reproducing apparatus comprising:
reproducing means for reproducing image signals recorded on a recording medium;
setting means for setting at least one or more start points and end points for editing the image signals recorded on said recording medium;
storage means for storing at least one or more image-signal start points and end points set by said setting means; and
display control means for controlling the display of marks corresponding to the image-signal start points and end points stored in said storage means.

2. The information reproducing apparatus according to claim 1, wherein said display control means controls the display in such a manner as to display the marks corresponding in number to the start and end points storable in said storage means.

3. The information reproducing apparatus according to claim 2, wherein said display control means controls the display in such a manner that the color of the marks corresponding to the start and end points stored already in said storage means becomes different from the color of the other marks corresponding to the start and end points not stored yet.

4. The information reproducing apparatus according to claim 2, wherein, when the recording medium is being reproduced by said reproducing means in accordance with the start and end points stored in said storage means, said display control means controls the display in such a manner that the color of the marks corresponding to the start and end points reproduced already becomes different from the color of the other marks corresponding to the start and end points not reproduced yet.

5. An image display control method comprising the steps of:
reproducing image signals recorded on a recording medium;
setting at least one or more start points and end points for editing the image signals recorded on said recording medium;
controlling the storage of at least one or more image-signal start points and end points set by the process at said setting step; and
controlling the display of marks corresponding to the image-signal start points and end points controlled with regard to the storage thereof by the process at said storage control step.

6. A recording medium where a program readable by a computer is recorded to execute a processing routine which comprises the steps of:
reproducing image signals recorded on the recording medium;
setting at least one or more start points and end points for editing the image signals recorded on said recording medium;
controlling the storage of at least one or more image-signal start points and end points set by the process at said setting step; and
controlling the display of marks corresponding to the image-signal start points and end points controlled with regard to the storage thereof by the process at said storage control step.
